# EUROPEAN PATENT APPLICATION

(11) **EP 3 617 025 A1**
(43) Date of publication of application: **04.03.2020**
(21) Application number: 17935740.5
(22) Date of filing: 28.12.2017
(51) Int. Cl.: B61C 3/02

(54) **TRAIN TRACTION RESCUE METHOD AND SYSTEM**

(30) Priority: 20.12.2017 CN 201711384553
(71) Applicant: CRRC Changchun Railway Vehicles Co., Ltd., Changchun, Jilin 130000 (CN)
(72) Inventor: SHA, Miao, Jilin 130000 (CN); SHEN, Di, Jilin 130000 (CN)
(74) Representative: Mewburn Ellis LLP
(86) International application number: PCT/CN2017/119205
(87) International publication number: WO 2019/119495

(57) **Abstract**

A train traction rescue method, wherein a battery supply apparatus is added to an intermediate direct-current link of a traction converter on the premise that an original high voltage and a traction system device remain unchanged, and the electric energy stored in a power battery pack is used to drive a rail train, with an overhead lines power failure, out of a positon where a current fault occurs under emergency driving conditions. A train traction rescue system capable of realizing the train traction rescue method. The present invention improves the safety of a train and ensures the safety of the lives of passengers and an operational orderliness of the train.

## Description

The present application claims priority to Chinese Patent Application No. 201711384553.1, titled "TRAIN TRACTION RESCUE METHOD AND SYSTEM", filed on December 20, 2017 with the State Intellectual Property Office of People's Republic of China, which is incorporated herein by reference in its entirety.

### FIELD

The present disclosure relates to the technical field of train fault processing, and in particular to a train traction rescue method and a train traction rescue system.

### BACKGROUND

With the rapid development of economy, and science technology in China, a train with a higher speed has been widely taken by travelers. The train is mainly driven by electric power, hence, ensuring a normal power supply of the train is an important factor to ensure life safety of travelers and a normal operation of the train.

In the conventional technology, a high-speed railway train, such as multiple units, high-speed trains, only receives power from a power supply catenary arranged above the railway. A step-down process is firstly performed on received high-voltage electricity by using a traction transformer. Then an AC-DC-AC conversion is performed on the electricity obtained after step-down by a train traction converter, to obtain electrical energy needed in normal operation of a traction motor. Traction motor provides a drive force for the train. Once the electrical energy needed in the normal operation of the traction converter can not be provided when the catenary is powered off abnormally or a high-voltage system fails, the railway train may stop travelling. In this case, the faulty train may travel away from a danger location by means of a traction rescue locomotive or other railway trains, so as to prevent the railway train from staying in a faulty location for a long time, thus causing travelers stranded or even a collision accident with subsequent trains. However, it cannot be guaranteed that the traction rescue locomotive can overcome various factors under complicated actual conditions and timely rescue the faulty train to leave the dangerous location, and the time effectiveness of rescue by the traction rescue locomotive is poor.

Therefore, an issue to be solved by those skilled in the art is to overcome technical defects existing in the conventional train traction rescue system and provide a train self-rescue mechanism without a need to rely on an external traction rescue locomotive.

### SUMMARY

A train traction rescue method is provided according to the present disclosure, which keeps a conventional high-voltage device and traction system unchanged, fully utilizes an operation principle of a train traction converter, and adds a battery-powered device in an intermediate direct current link of the traction converter, and utilizes electrical energy stored in a power battery pack, to drive the train with a catenary power supply failure to travel away from a current faulty location under an emergency driving condition, thereby improving safety of the train, and ensuring life safety of travelers and a normal operation of the train, and providing the travelers with a better travelling experience.

A train traction rescue system, which may implement the train traction rescue method, is provided according to the disclosure.

A train traction rescue method is provided according to an embodiment of the disclosure. The train traction rescue method includes: determining an energy storage quantity of a power battery pack in a battery-powered device based on an emergency traction power, an emergency travelling speed and an emergency travelling distance of a train; transmitting an activation signal to the battery-powered device by using a train control system when the train is unable to receive high-voltage electricity needed in normal operation from a catenary; transmitting electrical energy stored in the power battery pack to a direct current link of a traction converter and storing the electrical energy in a support capacitor of the direct current link after the battery-powered device receives the activation signal; determining whether a voltage across the support capacitor of the direct current link reaches a preset voltage threshold; and providing the electrical energy reaching the preset voltage threshold to an inverter device in the traction converter, in a case where the voltage across the support capacitor of the direct current link reaches the preset voltage threshold, where the electrical energy converted by the inverter device is provided to a train traction motor, to drive the train to travel away from a current faulty location at the emergency travelling speed.

Optionally, the train traction rescue method further includes: using the electrical energy that flows through the direct current link to charge the power battery pack when the train is able to receive the high-voltage electricity needed in the normal operation from the catenary.

Optionally, before using the electrical energy that flows through the direct current link to charge the power battery pack, the train traction rescue method further includes: obtaining a remaining electricity quantity of the power battery pack and sending the remaining electricity quantity of the power battery pack to the train control system via a preset route; determining whether the remaining electricity quantity is able to cause the train to travel for the emergency travelling distance at the emergency travelling speed; and determining that the remaining electricity quantity of the power battery pack is insufficient and the power battery pack needs to be charged in a case where the remaining electricity quantity is unable to cause the train to travel for the emergency travelling distance at the emergency travelling speed.

Optionally, the train traction rescue method further includes: acquiring the remaining electricity quantity every a certain time interval and performing a power loss analysis on the remaining electricity quantity based on the time interval and by using a preset service life prediction algorithm, to obtain a service life prediction report of the power battery pack; and setting a replacement date of the power battery pack based on the service life prediction report of the power battery pack.

A train traction rescue system is provided according to an embodiment of the disclosure. The train traction rescue system includes a power battery box, a reactor box and a DC/DC (direct current/direct current) converter box. The power battery box is configured to charge the DC/DC converter box. The reactor box is configured to store a preset quantity of electrical energy. An input end of the reactor box is connected to an output end of the power battery box, an output end of the reactor box is connected to an input end of the DC/DC converter box. The DC/DC converter box is configured to transmit electrical energy stored in the DC/DC converter box to an intermediate direct current link of a traction converter. A traction motor provides traction to a train with a catenary power supply failure based on electrical energy provided by an inverter device in the traction converter.

Optionally, the power battery box includes a power battery pack and a first pre-charging device. The power battery pack is configured to store and provide electrical energy. The first pre-charging device is connected to the power battery pack and configured to turn on a contactor control circuit based on a voltage across a first support capacitor in the DC/DC converter box.

Optionally, the first pre-charging device includes a first contactor control circuit and a second contactor control circuit arranged in parallel. The first contactor control circuit includes a first pre-charging resistor and a first contactor, and the second contactor control circuit includes a first main contactor. The first contactor control circuit is turned on and the second contactor control circuit is turned off to charge the first support capacitor with a first voltage, in a case where the voltage across the first support capacitor is less than a first voltage threshold. The second contactor control circuit is turned on and the first contactor control circuit is turned off to charge the first support capacitor with a second voltage, in a case where the voltage across the first support capacitor is not less than the first voltage threshold.

Optionally, the DC/DC converter box includes a chopper, the first support capacitor and a second pre-charging device. The first support capacitor is connected to an output end of the chopper and configured to store electrical energy. One end of the second pre-charging device is connected to the first support capacitor, the other end of the second pre-charging device is connected to a second support capacitor arranged in the intermediate direct current link, and the second pre-charging device is configured to charge the second support capacitor with the electrical energy stored in the first support capacitor.

Optionally, the intermediate direct current link includes a controllable switch, the second support capacitor and an electrical energy transmission device. The controllable switch is configured to charge the second support capacitor based on whether the switch is turned on or off. The second support capacitor is configured to store electrical energy. The electrical energy transmission device is connected to an input end of the inverter device and is configured to provide the electrical energy stored in the second support capacitor to the inverter device.

The train traction rescue method provided according to the disclosure is implemented as follows. An energy storage quantity of a power battery pack in a battery-powered device is determined based on an emergency traction power, an emergency travelling speed and an emergency travelling distance of a train. An activation signal is transmitted to the battery-powered device by using a train control system when the train is unable to receive high-voltage electricity needed in normal operation from a catenary. Electrical energy stored in the power battery pack is transmitted to a direct current link of a traction converter and the electrical energy is stored in a support capacitor of the direct current link after the battery-powered device receives the activation signal. It is determined whether a voltage across the support capacitor of the direct current link reaches a preset voltage threshold. The electrical energy reaching the preset voltage threshold is provided to an inverter device in the traction converter in a case where the voltage across the support capacitor of the direct current link reaches the preset voltage threshold. The electrical energy converted by the inverter device is provided to a train traction motor, to drive the train to travel away from a current faulty location at the emergency travelling speed.

Apparently, according to the technical solution provided in the present disclosure, a conventional high-voltage device and traction system is kept unchanged, an operation principle of a train traction converter is fully utilized, and a battery-powered device is added in an intermediate direct current link of the traction converter, and electrical energy stored in a power battery pack is used to drive the train with a catenary power supply failure to travel away from a current faulty location under an emergency driving condition, thereby improving safety of the train, and ensuring life safety of travelers and a normal operation of the train, and providing the travelers with a better travelling experience. A train traction rescue system which may implement the train traction rescue method is further provided according to the present disclosure, which has the above beneficial effects and is not repeated herein.

### BRIEF DESCRIPTION OF THE DRAWINGS

In order to more clearly illustrate technical solutions of the embodiments of the present disclosure or the conventional technology, the drawings required in the description of the embodiments or the conventional technology are briefly described below. Apparently, the drawings show only some embodiments of the present disclosure, and other drawings may be acquired by those skilled in the art based on the drawings provided herein without any creative work.
Figure 1 is a flow diagram of a train traction rescue method according to an embodiment of the present disclosure;
Figure 2 is a flow diagram showing that the battery-powered device is charged by using an intermediate direct current link in a train traction rescue method according to an embodiment of the present disclosure;
Figure 3 is a schematic circuit principle diagram of a train traction rescue system according to an embodiment of the present disclosure; and
Figure 4 is a schematic circuit principle diagram of power supply of a train provided with a train traction rescue system according to an embodiment of the present disclosure.

### DETAILED DESCRIPTION

A train traction rescue method and system are provided according to the present disclosure, which keeps a conventional high-voltage device and traction system unchanged, fully utilizes an operation principle of a train traction converter, and adds a battery-powered device in an intermediate direct current link of the traction converter, and utilizes electrical energy stored in a power battery pack, to drive the train with a catenary power supply failure to travel away from a current faulty location under an emergency driving condition, thereby improving safety of the train, and ensuring life safety of travelers and a normal operation of the train, and providing the travelers with a better travelling experience.

In order to make the purpose, technical scheme and advantages of the embodiment of the present disclosure clearer, hereinafter, the technical solutions according to the embodiments of the present disclosure will be described clearly and completely in conjunction with the drawings. Apparently, the described embodiments are only a few rather than all of embodiments of the present disclosure. Any other embodiments obtained by those skilled in the art based on the embodiments of the present disclosure without any creative work fall within the scope of protection of the disclosure.

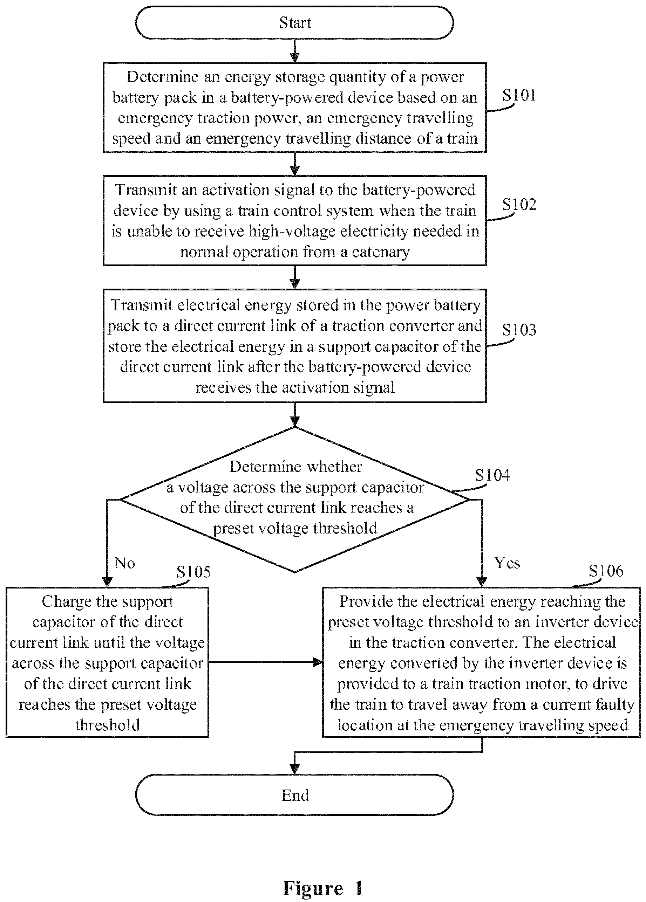

Hereinafter, reference is made to Figure 1, which is a flow diagram of a train traction rescue method according to an embodiment of the present disclosure. The train traction rescue method includes following steps S101 to S106.

In step S101, an energy storage quantity of a power battery pack in a battery-powered device is determined based on an emergency traction power, an emergency travelling speed and an emergency travelling distance of a train.

In a case that the battery is used for temporarily providing electrical energy needed in emergency travelling of a train with a catenary power supply failure, it is difficult for the battery to provide high-voltage electricity to a train traction converter as a power supply catenary, and the train may not travel for a normal power supply travelling distance. If the train with a catenary power supply failure needs to travel for the normal power supply travelling distance, a cost and a volume of the battery may be greatly increased, and a weight of the train may be greatly increased. Hence, the method according to the present disclosure fully utilizes an operation principle of a train traction converter and provides a direct current with a relatively low voltage to an intermediate direct current link of the traction converter, so as to provide the electrical energy needed in emergency travelling to the train traction motor after the direct current is processed by an inverter device.

Generally, a step-down process is firstly performed by a traction transformer on high-voltage alternating current received from the power supply catenary by the train firstly. And the relatively low-voltage direct current is obtained by using a rectifying link of the traction converter, which is the intermediate direct current link. The direct current is converted into the alternating current, that may be used by the traction motor, by the inverter device. A core idea of the present disclosure is to skip the traction transformer and the rectifying link of the traction converter, and directly use the battery-powered device to provide relatively low-voltage direct current to the intermediate direct current link, so as to effectively save the cost, and the train may rescue itself without waiting for a traction rescue locomotive, and an actual use effect is better.

The train described in the present disclosure typically only uses the electrical energy obtained from the power supply catenary and used to drive the train to operate normally. That is, the train is a single power train, and is different from the hybrid train having a battery module. Therefore, different from an operation state of the hybrid train, the battery-powered device provided by the present disclosure is only applicable to an emergency state, and only provides a certain quantity of electrical energy to the train traction motor. In this case, the traction motor may provide a certain drive force for a faulty train, and the faulty train may travel for a preset emergency travelling distance at a preset emergency travelling speed in a case that a preset emergency traction power is met. In this case, the electrical energy provided to the traction motor generally can not drive the traction motor to reach operation power that is implemented when the traction motor normally uses the power supply catenary, and can only provide a low emergency travelling speed.

The energy storage quantity of a power battery pack in a battery-powered device may be determined based on an emergency traction power, an emergency travelling speed and an emergency travelling distance of a train. Since the power battery pack is made up of smaller batteries connected in series, each power battery pack may occupy a certain volume, and after the needed energy storage capacity is obtained, a proper installation location on the train may be selected based on an actual size of the power battery pack finally formed, and a location of the traction converter on the train may also be referred.

Specifically, there is a variety of methods for determining the final energy storage quantity of the power battery pack based on above emergency parameters. A redundant design may be adopted. That is, the power battery pack can not only provide the train with the electrical energy needed in travelling for only a complete emergency travelling distance, but also provide the faulty train with the electrical energy needed in traveling for a longer distance in a case that the energy storage quantity of the power battery pack is appropriately increased where possible, to adapt a more complicated condition and provide higher levels of protection for the train and travelers.

In step S102, an activation signal is transmitted to the battery-powered device by using a train control system when the train is unable to receive high-voltage electricity needed in normal operation from a catenary.

Based on step S101, the step S102 aims to transmit the activation signal to the battery-powered device by using the train control system when the train is unable to obtain the high-voltage electricity needed in the normal operation from the catenary. The activation signal is intended to "inform" the battery-powered device to provide the electrical energy to the intermediate direct current link of the traction converter.

Apparently, generally, the train may normally obtain the needed high-voltage electricity from the power supply catenary, and the power battery pack in the battery-powered device may be charged. Even if the power battery pack is not used, the electricity quantity of the power supply catenary may also be slowly lost and the service life of the battery may gradually be depleted over the time. Furthermore, it is also possible to set the conditions under which the power battery pack is charged, where the conditions are various and may be flexibly set and selected based on different requirements and limitation factors under actual conditions, which are not specifically limited herein.

Furthermore, the remaining electricity quantity of the power battery pack may be acquired every a certain time interval and a power loss analysis may be performed on the remaining electricity quantity based on the time interval and by using a preset service life prediction algorithm, to obtain a service life prediction report of the power battery pack. A replacement date of the power battery pack may be set based on the service life prediction report of the power battery pack, to prevent the power battery pack from being damaged and unusable when it is needed to use the battery-powered device.

In step S103, electrical energy stored in the power battery pack is transmitted to a direct current link of a traction converter and the electrical energy is stored in a support capacitor of the direct current link after the battery-powered device receives the activation signal.

In step S104, it is determined whether a voltage across the support capacitor of the direct current link reaches a preset voltage threshold.

Based on step S102, steps S103 and S104 aim to transmit the electrical energy stored in the power battery pack to the intermediate direct current link in the traction converter and store the electrical energy in the support capacitor of the direct current link for electrical energy storage. The voltage across the support capacitor reaching the preset voltage threshold may provide the voltage needed in operation of the inverter device, to eventually supply power to the traction motor to provide the drive force needed in emergency travelling for the train.

In step S105, the support capacitor of the direct current link is charged continuously until the voltage across the support capacitor of the direct current link reaches the preset voltage threshold.

Step S105 is performed in a case that a determination result of step S104 is that the voltage across the support capacitor of the direct current link does not reach the preset voltage threshold. That is, a condition of continuing to charge the support capacitor of the direct current link is met until the voltage across the support capacitor of the direct current link reaches the preset voltage threshold.

In step S106, the electrical energy reaching the preset voltage threshold is provided to an inverter device in the traction converter. The electrical energy converted by the inverter device is provided to a train traction motor, to drive the train to travel away from a current faulty location at the emergency travelling speed.

Step S106 is performed in a case that a determination result of step S104 is that the voltage across the support capacitor of the direct current link reaches the preset voltage threshold. That is, the electrical energy that reaches the preset voltage threshold is provided to the inverter device in the traction converter, so that the electrical energy converted by the inverter device is provided to the train traction motor, thereby driving the train to travel away from a current faulty location at the emergency travelling speed to avoid occurrence of danger.

In the rain traction rescue method according to the technical solution provided in the present disclosure, a conventional high-voltage device and traction system is kept unchanged, an operation principle of a train traction converter is fully utilized, and a battery-powered device is added in an intermediate direct current link of the traction converter, and electrical energy stored in a power battery pack is used to drive the train with a catenary power supply failure to travel away from a current faulty location under an emergency driving condition, thereby improving safety of the train, and ensuring life safety of travelers and a normal operation of the train, and providing the travelers with a better travelling experience.

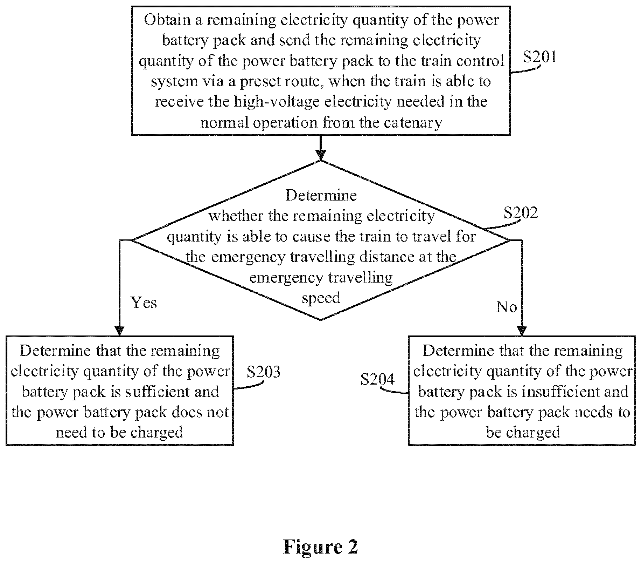

Hereinafter, reference is made to Figure 2, which is a flow diagram showing that the battery-powered device is charged by using an intermediate direct current link in a train traction rescue method according to an embodiment of the present disclosure. A process that the battery-powered device is charged by using an intermediate direct current link includes steps S201 to step S204.

In step S201, a remaining electricity quantity of the power battery pack is obtained and the remaining electricity quantity of the power battery pack is sent to the train control system via a preset route, when the train is able to receive high-voltage electricity needed in normal operation from a catenary.

In step S202, it is determined whether the remaining electricity quantity is able to cause the train to travel for the emergency travelling distance at the emergency travelling speed.

In step S202, a condition for charging the power battery pack is set. It is determined whether the remaining electricity quantity is able to cause the train to travel for the emergency travelling distance at the emergency travelling speed.

In step S203, it is determined that the remaining electricity quantity of the power battery pack is sufficient and the power battery pack does not need to be charged.

Step S203 is performed in a case that a determination result of step S202 is that the remaining electricity quantity is able to cause the train to travel for the emergency travelling distance at the emergency travelling speed, that is, it is determined that the remaining electricity quantity of the power battery pack is sufficient and the power battery pack does not need to be charged.

In step S204, it is determined that the remaining electricity quantity of the power battery pack is insufficient and the power battery pack needs to be charged.

Step S204 is performed in a case that a determination result of step S202 is that the remaining electricity quantity is unable to cause the train to travel for the emergency travelling distance at the emergency travelling speed, that is, it is determined that the remaining electricity quantity of the power battery pack is insufficient and the power battery pack needs to be charged.

In the rain traction rescue method according to the technical solution provided in the present disclosure, a conventional high-voltage device and traction system is kept unchanged, an operation principle of a train traction converter is fully utilized, and a battery-powered device is added in an intermediate direct current link of the traction converter, and electrical energy stored in a power battery pack is used to drive the train with a catenary power supply failure to travel away from a current faulty location under an emergency driving condition, thereby improving safety of the train, and ensuring life safety of travelers and a normal operation of the train, and providing the travelers with a better travelling experience.

In practice, application situations are various and may not be described one by one, those skilled in the art should realize that there may be many examples based on the principle of the basic method provided by the present disclosure in conjunction with the actual condition without creative work, which fall within the protection scope of the present disclosure.

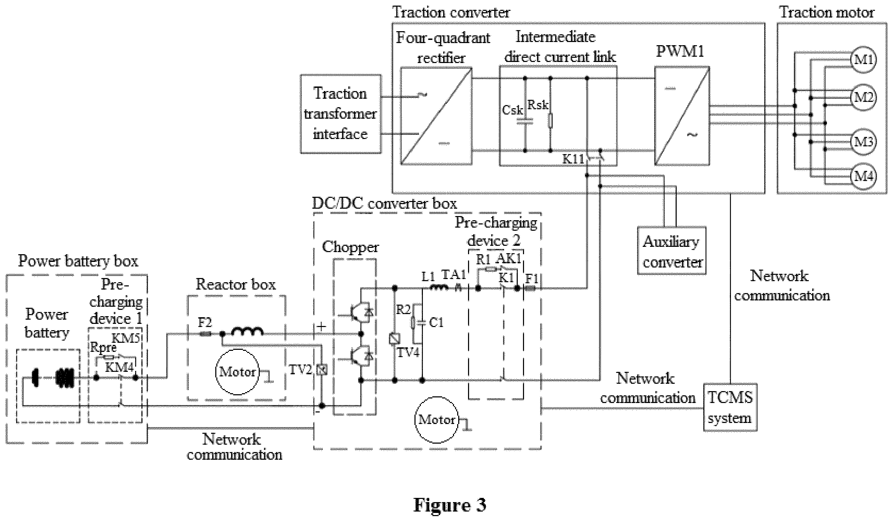

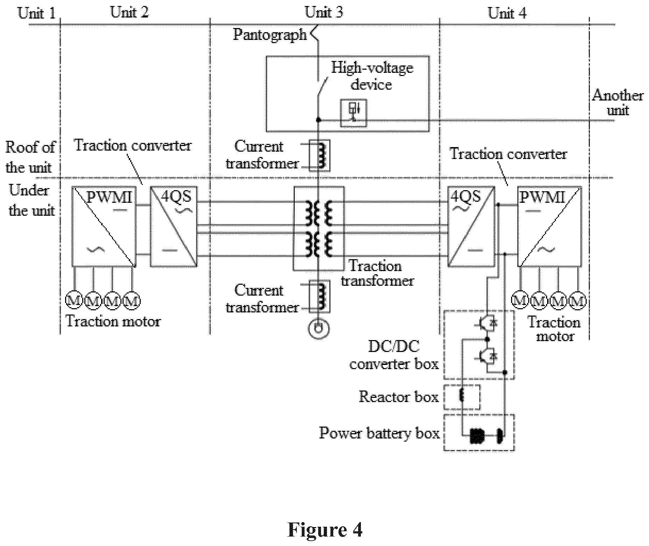

Hereinafter, reference is made to Figures 3 and 4. Figure 3 is a schematic circuit principle diagram of a train traction rescue system according to an embodiment of the present disclosure. Figure 4 is a schematic circuit principle diagram of power supply of a train provided with a train traction rescue system according to an embodiment of the present disclosure.

The train traction rescue system may include a power battery box, a reactor box and a DC/DC (direct current/direct current) converter box. The power battery box is configured to charge the DC/DC converter box. The reactor box is configured to store a preset quantity of electrical energy. An input end of the reactor box is connected to an output end of the power battery box, an output end of the reactor box is connected to an input end of the DC/DC converter box. The DC/DC converter box is configured to transmit electrical energy stored in the DC/DC converter box to an intermediate direct current link of a traction converter. A traction motor provides traction to a train with a catenary power supply failure based on electrical energy provided by an inverter device in the traction converter.

The power battery box includes a power battery pack and a first pre-charging device. The power battery pack is configured to store and provide electrical energy. The first pre-charging device is connected to the power battery pack and configured to turn on a contactor control circuit based on a voltage across a first support capacitor in the DC/DC converter box.

Furthermore, the first pre-charging device includes a first contactor control circuit and a second contactor control circuit arranged in parallel. The first contactor control circuit includes a first pre-charging resistor and a first contactor, and the second contactor control circuit includes a first main contactor. The first contactor control circuit is turned on and the second contactor control circuit is turned off to charge the first support capacitor with a first voltage, in a case where the voltage across the first support capacitor is less than a first voltage threshold. The second contactor control circuit is turned on and the first contactor control circuit is turned off to charge the first support capacitor with a second voltage, in a case where the voltage across the first support capacitor is not less than the first voltage threshold.

In an embodiment, the DC/DC converter box includes a chopper, the first support capacitor and a second pre-charging device. The first support capacitor is connected to an output end of the chopper and configured to store electrical energy. One end of the second pre-charging device is connected to the first support capacitor, the other end of the second pre-charging device is connected to a second support capacitor arranged in the intermediate direct current link, and the second pre-charging device is configured to charge the second support capacitor with the electrical energy stored in the first support capacitor.

Furthermore, the intermediate direct current link may include a controllable switch, the second support capacitor and an electrical energy transmission device. The controllable switch is configured to charge the second support capacitor based on whether the switch is turned on or off. The second support capacitor is configured to store electrical energy. The electrical energy transmission device is connected to an input end of the inverter device and is configured to provide the electrical energy stored in the second support capacitor to the inverter device.

The above units may be applied to a following specific actual usage process. Reference is made to Figure 4, when a high speed railway train is travelling normally, the energy needed in the operation is provided by the power supply catenary. An alternating current power is inputted into a high-voltage device by using a pantograph. The high-voltage electricity is converted into a low-voltage alternating current by the traction transformer, to drive the traction converter to operate by using the alternating current. A main circuit of the traction converter at least includes a four-quadrant rectifier, an intermediate direct current link, a three-phase inverter and so on. The traction converter use the alternating current outputted from the inverter to drive the traction motor of the train to operate, thus meeting requirements for electric traction, regenerative braking and auxiliary system power supply of the multiple units.

As shown in Figure 4, in the embodiment, stored electrical energy is directly provided to the intermediate direct current link of the traction converter in the case of a high-speed railway train without a high-voltage power from the power supply catenary by adding the power battery box, the reactor box, and the DC/DC converter box in the existing main circuit of the multiple units, to activate the three-phase inverter to drive the operation of the traction motor, and finally form the train traction rescue system provided by this disclosure.

As shown in Figure 3, the electrical energy stored in an electric battery in the power battery box is an energy source for driving the operation of the high-speed railway train. A pre-charging device 1 in the power battery box is located on a circuit across the power battery box and the reactor box. A pre-charging device 2 in the DC/DC converter box is located on a circuit across the DC/DC converter box and the direct current link of the traction converter. The pre-charging device 1 and the pre-charging 2 have the same function. The pre-charging device 1 includes a pre-charging resistor Rpre, a pre-charging contactor KM5, and a main contactor KM4. The pre-charging device 2 includes a charging resistor R1, a pre-charging contactor AK1, and a main contactor K1. The reactor box provides energy storage for the DC/DC converter. The specific operation flow is as follows.

When the stored electrical energy outputted from the power battery is used, firstly the pre-charging contactor KM5 of the pre-charging device 1 is closed. The pre-charging resistor Rpre of the pre-charging device 1 and the chopper module of the DC/DC converter are connected in inverse parallel with a diode to charge a support capacitor C1 of the DC/DC converter. After the voltage across the support capacitor C1 reaches a certain value, the main contactor KM4 is closed, the pre-charging contactor KM5 is turned off, and the chopper module of the DC/DC converter is started.

After the DC/DC converter is started, the voltage is increased by controlling a switch of the chopper. When the voltage reaches a certain value, a contactor K11 of an intermediate direct current link of the traction converter is closed by using the train control system, and then the pre-charging contactor AK1 of the pre-charging device 2 is closed. The support capacitor Csk of the intermediate direct current link is charged through the pre-charging resistor R1 of the pre-charging device 2. After the voltage across the support capacitor Csk reaches a certain value, the main contactor K1 is closed and the pre-charging contactor AK1 is turned off. The auxiliary converter is started to provide power to an auxiliary load of the multiple units and activates three-phase inverter of the traction converter to drive the traction motor.

When the remaining electricity quantity of the power battery pack is low and cannot meet the emergency travelling requirement for the faulty train, it is necessary to provide the electrical energy to the four-quadrant rectifier of the traction converter by using the power supply catenary, and charge the power battery pack by using the intermediate direct current link. The pre-charging device 2 is started to charge the support capacitor C1 of the DC/DC converter, the chopper module of the DC/DC converter is activated after charging is finished, and step-down is achieved by controlling a switch of the chopper module, and the pre-charging device 1 is started to charge the power battery when the voltage reaches a certain value.

The DC/DC converter performs information interaction with the traction converter by using the train control system of the high-speed railway train, and the DC/DC converter and the power battery box implement the information interaction by using a directly connected communication cable. When the intermediate direct current link of the traction converter fails, system protection is achieved by turning off the contactor K11 of the intermediate direct current link. When a power supply failure in the DC/DC converter is detected through a TV4 or a TA1, the main contactor K1 of the pre-charging device 2 is turned off to achieve the system protection. When a fault in the DC/DC converter or a fault in the power battery is detected, the system protection is achieved by turning off the main contactor KM4 of the pre-charging device 2. The other components in the drawings are common components that are set for numerical detection or for ensuring function implementation, which are not described herein.

A practical operation process is described as follows. When the high-speed railway train can not operate due to a catenary power supply failure, after a related start signal is read by a network system through a manual operation of a driver, the power battery pre-charging device 1 is started by connecting a network communication interface of the DC/DC converter and transmitting activation information to the power battery box to activate the power battery output. An output voltage is increased by using the DC/DC converter and the electrical energy is provided to the intermediate direct link of the traction converter to drive the operation of the traction motor.

In this mode of operation, it is forbidden for the inverter of the traction converter to activate the regenerative braking function, and parking is based on air braking. At the same time, the traction converter can only provide part of the traction power in this emergency operation mode and can not travel at full power. When the train travels until a remaining electricity quantity of the power battery is low, the inverter module of the traction converter and a chopper module pulse of the DC/DC converter are locked and the output power of the power battery is disconnected.

The embodiments in this specification are described in a progressive way, each of which emphasizes the differences from others, and the same or similar parts among the embodiments can be referred to each other. Since the device disclosed in the embodiments corresponds to the method therein, the description thereof is relatively simple, and for relevant matters references may be made to the description of the method.

It may be known by those skilled in the art that, exemplary units and algorithm steps described in conjunction with the embodiments disclosed herein can be realized by electronic hardware, computer software or a combination thereof. In order to clearly illustrate interchangeability of the hardware and the software, steps and constitution of each embodiment have been described generally in view of functions in the above specification. Whether the function is executed in a hardware way or in a software way depends on application of the technical solution and design constraint condition. Those skilled in the art can use different method for each application to realize the described function, and this is not considered to be beyond the scope of the application.

The principles and implementations are described by using specific embodiments herein. The above description of the embodiments is only intended to help understanding the method of the present disclosure and the key concept thereof. It should be noted that, numerous improvements and modifications can be made to the present disclosure by those skilled in the art without deviation from the principle of the present disclosure. These improvements and modifications should fall within the scope of protection of the present disclosure.

It should be further noted that the relationship terminologies such as "first", "second" and the like are only used herein to distinguish one entity or operation from another, rather than to necessitate or imply that the actual relationship or order exists among the entities or operations. Furthermore, terms of "include", "comprise" or any other variants are intended to be non-exclusive. Therefore, a process, method, article or device including multiple elements includes not only the elements but also other elements that are not enumerated, or also include the elements inherent for the process, method, article or device. Unless expressively limited otherwise, the statement "comprising (including) one..." does not exclude the case that other similar elements may exist in the process, method, article or device.

## Claims

1. A train traction rescue method, comprising:
determining an energy storage quantity of a power battery pack in a battery-powered device based on an emergency traction power, an emergency travelling speed and an emergency travelling distance of a train;
transmitting an activation signal to the battery-powered device by using a train control system when the train is unable to receive high-voltage electricity needed in normal operation from a catenary;
transmitting electrical energy stored in the power battery pack to a direct current link of a traction converter and storing the electrical energy in a support capacitor of the direct current link after the battery-powered device receives the activation signal;
determining whether a voltage across the support capacitor of the direct current link reaches a preset voltage threshold; and
providing the electrical energy reaching the preset voltage threshold to an inverter device in the traction converter, in a case where the voltage across the support capacitor of the direct current link reaches the preset voltage threshold, wherein the electrical energy converted by the inverter device is provided to a train traction motor, to drive the train to travel away from a current faulty location at the emergency travelling speed.

2. The train traction rescue method according to claim 1, further comprising:
using the electrical energy that flows through the direct current link to charge the power battery pack when the train is able to receive the high-voltage electricity needed in the normal operation from the catenary.

3. The train traction rescue method according to claim 2, wherein before using the electrical energy that flows through the direct current link to charge the power battery pack, the method further comprises:
obtaining a remaining electricity quantity of the power battery pack and sending the remaining electricity quantity of the power battery pack to the train control system via a preset route;
determining whether the remaining electricity quantity is able to cause the train to travel for the emergency travelling distance at the emergency travelling speed; and
determining that the remaining electricity quantity of the power battery pack is insufficient and the power battery pack needs to be charged in a case where the remaining electricity quantity is unable to cause the train to travel for the emergency travelling distance at the emergency travelling speed.

4. The train traction rescue method according to claim 3, further comprising:
acquiring the remaining electricity quantity every a certain time interval and performing a power loss analysis on the remaining electricity quantity based on the time interval and by using a preset service life prediction algorithm, to obtain a service life prediction report of the power battery pack; and
setting a replacement date of the power battery pack based on the service life prediction report of the power battery pack.

5. A train traction rescue system, comprising:
a power battery box, configured to charge a DC/DC converter box;
a reactor box, configured to store a preset quantity of electrical energy, wherein an input end of the reactor box is connected to an output end of the power battery box, an output end of the reactor box is connected to an input end of the DC/DC converter box; and
the DC/DC converter box, configured to transmit electrical energy stored in the DC/DC converter box to an intermediate direct current link of a traction converter, wherein a traction motor provides traction to a train with a catenary power supply failure based on electrical energy provided by an inverter device in the traction converter.

6. The train traction rescue system according to claim 5, wherein the power battery box comprises:
a power battery pack, configured to store and provide electrical energy;
a first pre-charging device, connected to the power battery pack and configured to turn on a contactor control circuit based on a voltage across a first support capacitor in the DC/DC converter box.

7. The train traction rescue system according to claim 6, wherein
the first pre-charging device comprises a first contactor control circuit and a second contactor control circuit arranged in parallel, wherein the first contactor control circuit comprises a first pre-charging resistor and a first contactor, and the second contactor control circuit comprises a first main contactor;
the first contactor control circuit is turned on and the second contactor control circuit is turned off to charge the first support capacitor with a first voltage, in a case where the voltage across the first support capacitor is less than a first voltage threshold; and
the second contactor control circuit is turned on and the first contactor control circuit is turned off to charge the first support capacitor with a second voltage, in a case where the voltage across the first support capacitor is not less than the first voltage threshold.

8. The train traction rescue system according to claim 7, wherein the DC/DC converter box comprises:
a chopper;
the first support capacitor, connected to an output end of the chopper and configured to store electrical energy; and
a second pre-charging device, wherein one end of the second pre-charging device is connected to the first support capacitor, the other end of the second pre-charging device is connected to a second support capacitor arranged in the intermediate direct current link, and the second pre-charging device is configured to charge the second support capacitor with the electrical energy stored in the first support capacitor.

9. The train traction rescue system according to claim 8, wherein the intermediate direct current link comprises:
a controllable switch, configured to charge the second support capacitor based on whether the switch is turned on or off;
the second support capacitor, configured to store electrical energy; and
an electrical energy transmission device, connected to an input end of the inverter device and configured to provide the electrical energy stored in the second support capacitor to the inverter device.
